# EUROPÄISCHE PATENTANMELDUNG

(11) **EP 1 407 668 A2**
(43) Veröffentlichungstag der Anmeldung: **14.04.2004**
(21) Anmeldenummer: 03020233.7
(22) Anmeldetag: 06.09.2003
(51) Int. Cl.: A21B 1/44, A21B 7/00, A21C 13/02, A21B 3/07

(54) **Backsystem sowie Herstellungsverfahren für Backwaren**

(30) Priorität: 12.10.2002 DE 10247720
(71) Anmelder: Werner & Pfleiderer Lebensmitteltechnik GmbH, 91550 Dinkelsbühl (DE)
(72) Erfinder: Seidel, Uwe, 91596 Burk (DE)
(74) Vertreter: Rau, Manfred, Dr. Dipl.-Ing.

(57) **Zusammenfassung**

Ein Backsystem (1) weist eine Vorbereitungseinrichtung (2, 7, 10) für zu verarbeitende Teiglinge, eine Gärvorrichtung (16) und einen Stikkenofen (39) auf. Den Transport hin zum Gärraum ermöglicht eine Zuführeinrichtung (18), den hin zum Stikkenofen (39) eine Fördereinrichtung (38) und den aus dem Stikkenofen (39) eine Abführeinrichtung (76a). Beim Herstellen der Backwaren werden die Teiglinge zunächst vorbereitet, anschließend einzeln oder chargenweise dem Gärraum (20) kontinuierlich zugeführt, danach einzeln oder chargenweise im Gärraum (20) kontinuierlich gegärt, vom Gärraum (20) zum Stikkenofen (39) kontinuierlich gefördert und das Backgut nach dem kontinuierlichen Backen im Stikkenofen (39) aus diesem abgeführt. Es resultiert ein weitgehend automatisiertes Backsystem (1) und ein entsprechendes Herstellungsverfahren für Backwaren.

## Beschreibung

Die Erfindung betrifft ein Backsystem sowie ein Herstellungsverfahren für Backwaren.

Aus der DE 195 39 856 A1 ist ein Tunnel-Stikkenofen bekannt, welcher mehrere hintereinander angeordnete und mittels Türen gegeneinander verschließbare Teilbackräume aufweist. Mittels einer Fördereinrichtung im Bodenbereich des Stikkenofens können Backwagen taktweise von Teilbackraum zu Teilbackraum transportiert werden. Mit einem derartigen Backwagen ist ein kontinuierlicher Backbetrieb von Backgut-Chargen möglich. Eine Einbindung des Stikkenofens der DE 195 39 856 A1 in ein weitere Herstellungsschritte umfassendes Herstellungsverfahren ist nicht angesprochen.

Es ist eine Aufgabe der vorliegenden Erfindung, einen Stikkenofen, welcher einen kontinuierlichen Backbetrieb für Backgut oder für Backgut-Chargen zulässt, in ein Backsystem derart zu integrieren, dass es neben dem kontinuierlichen Backen auch möglich ist, das dem Backen vorausgehende Gären von Teiglingen oder von Teigling-Chargen kontinuierlich durchzuführen.

Diese Aufgabe ist erfindungsgemäß gelöst durch ein Backsystem mit den Merkmalen nach Anspruch 1 sowie durch ein Herstellungsverfahren mit den Merkmalen nach Anspruch 16.

Das erfindungsgemäße Backsystem und das erfindungsgemäße Herstellungsverfahren ermöglichen ein kontinuierliches Verarbeiten von Teiglingen und Backgut bis zum Abschluss des Backvorganges, ohne dass die Teiglinge oder das daraus hervorgehende Backgut manuell gehandhabt werden müssen. Zudem nutzen das Backsystem sowie das Herstellungsverfahren die Vorteile des Stikkenofens, d. h. eine gute Energieeffizienz sowie ein gleichmäßiges Backergebnis. Das Backgut kann mit minimalem Personalaufwand und in relativ kurzer Zeit fertiggestellt werden.

Eine Gärvorrichtung nach Anspruch 2 ermöglicht einen Gärvorgang, dessen Durchsatz an den Durchsatz des Stikkenofens anpassbar ist.

Bei einem Stikkenofen gemäß Anspruch 3 werden die verschiedenen Teilbackräume des Stikkenofens gemeinsam mit den Backwagen in die verschiedenen Backpositionen umpositioniert. Dies schafft die Möglichkeit einer einfachen Ausgestaltung des Backraumes des Stikkenofens, ohne dass zwischen jeweils zwei aneinander angrenzenden Teilbackräumen aufwendige Türkonstruktionen vorgesehen werden müssen. Hänge-Wagen haben sich zum Transport von Teiglingen in einer Gärvorrichtung bzw. zum Transport von Backgut in einem Stikkenofen bewährt.

Eine Erzeugung der Heißluft sowie eine Führung der Umluft innerhalb des Stikkenofens gemäß Anspruch 4 lässt sich baulich relativ einfach realisieren.

Nach Anspruch 5 ausgebildete Teilbackräume lassen sich einfach voneinander abtrennen, insbesondere gegeneinander wärmeisolieren. Auch eine im Wesentlichen luftdichte Abdichtung der Teil-Backräume gegeneinander ist möglich.

Eine Drehbarkeit der Teilbackräume gemäß Anspruch 6 vermeidet zwischen diesen angeordnete Zwischentüren.

Innerhalb der Teilbackräume drehbar angeordnete Backwagen gemäß Anspruch 7 gewährleisten einen gleichmäßigen Zugang der Umluft zum Backgut eines Backwagens.

Gegeneinander nach Anspruch 8 abgedichtete Teilbackräume führen insbesondere dann, wenn die Teilbackräume gegeneinander wärmeisoliert sind, zur Möglichkeit, in den einzelnen Teilbackräumen voneinander unabhängige Back-Teilprozesse zu steuern.

Eine Zugangstür gemäß Anspruch 9 vereinfacht das automatische Zuführen von Teiglingen in den Stikkenofen.

Prinzipiell können dann, wenn beim Herstellungsverfahren Gär- oder Backwagen eingesetzt sind, diese das gesamte Herstellungsverfahren einschließlich des Gärens und des Backens als Einheiten aus Blechen und Wagen durchlaufen. Eine getrennte Förderung der Bleche und der Wagen gemäß Anspruch 10 vereinfacht die Ausgestaltung des Backsystems, da eine Förderung einzelner Bleche z. B. weniger Platz beansprucht als die Förderung ganzer Wagen. Dabei kann eine Umsetzeinrichtung für Bleche oder Wägen und/oder eine Wendeeinrichtung für Teiglinge vorgesehen sein, was den Automatisierungsgrad des Backsystems weiter erhöht.

Eine Stapel/Entstapeleinrichtung gemäß Anspruch 11 führt zu einem kompakten Backsystem. Je nach Anforderung des im Zuge des Herstellungsverfahrens abzuarbeitenden Förderschritts können einzelne Bleche oder Stapel von Blechen transportiert werden.

Eine Rückführeinrichtung gemäß Anspruch 12 vereinfacht die Logistik des Backsystems sowie des Herstellungsverfahrens.

Eine Abführeinrichtung gemäß Anspruch 13 führt zu ähnlichen Vorteilen wie bei der Fördereinrichtung gemäß Anspruch 9 angesprochen.

Dichteinrichtungen gemäß Anspruch 14 verbessern die Energieeffizienz des Stikkenofens.

Eine Kühleinrichtung gemäß Anspruch 15 ermöglicht eine einfache Zwischenlagerung der Backwaren.

Eine weitere Aufgabe der Erfindung ist es, ein Herstellungsverfahren für Backwaren anzugeben, bei dem ein kontinuierliches Gären von Teiglingen oder von Teigling-Chargen und daran anschließend ein kontinuierliches Backen des aus den Teiglingen hervorgehenden Backguts erfolgt.

Die Vorteile des erfindungsgemäßen Herstellungsverfahrens nach den Ansprüchen 16 bis 26 entsprechen den vorstehend für das Backsystem erwähnten Vorteilen.

Hierbei kann das Backgut entweder nach Anspruch 24 alle Backpositionen durchlaufen oder es können gemäß Anspruch 25 mehrere Backpositionen im Stikkenofen gleichzeitig genutzt werden. Die letzte, insbesondere auch taktweise ausführbare Herstellungsart erhöht den Durchsatz beim Herstellungsverfahren.

Ausführungsbeispiele der Erfindung werden nachfolgend anhand der Zeichnung näher erläutert. In dieser zeigen
- Fig. 1: eine interne Details zeigende Draufsicht auf ein erfindungsgemäßes Backsystem,
- Fig. 2: eine Seitenansicht des Backsystems von Fig. 1,
- Fig. 3: eine Ausschnittsvergrößerung aus Fig. 2, die einen Stikkenofen des Backsystems zeigt.
- Fig. 4: eine interne Details zeigende Draufsicht auf den Stikkenofen,
- Fig. 5: eine Ausschnittsvergrößerung aus Fig. 3,
- Fig. 6 bis 11: in einer zu Fig. 4 ähnlichen Draufsicht Momentaufnahme des Stikkenofens bei einem ersten Backverfahren,
- Fig. 12 bis 17: in einer zu Fig. 4 ähnlichen Draufsicht des Stikkenofens Momentaufnahmen eines zweiten Backverfahrens; und
- Fig. 18: eine Draufsicht auf ein alternatives Backsystem.

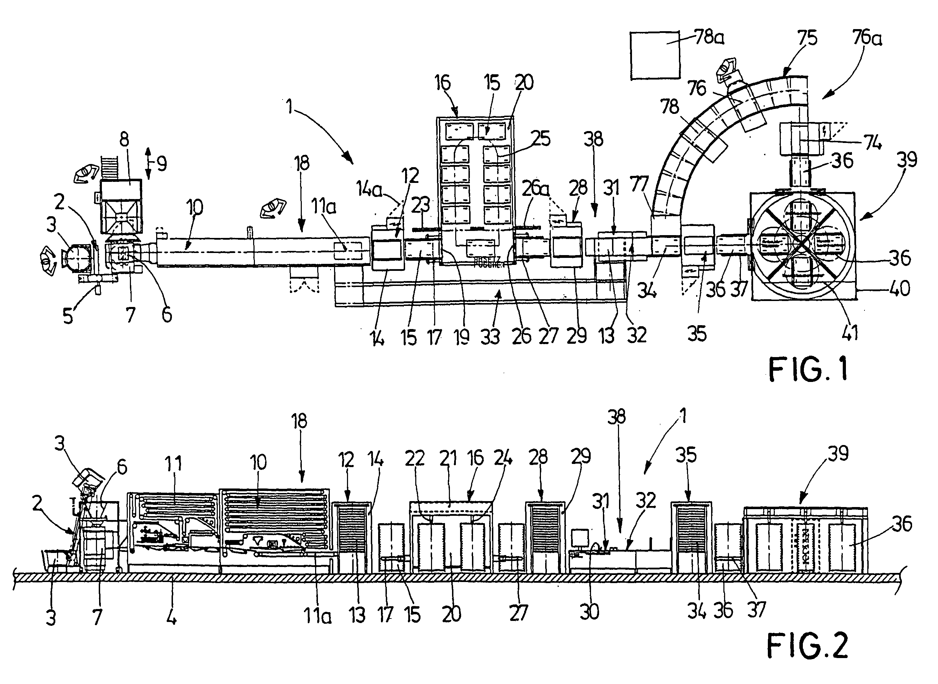

Fig. 1 und 2 zeigen Gesamtansichten eines insgesamt mit dem Bezugszeichen 1 bezeichneten Backsystems zur Herstellung von nicht im einzelnen dargestellten Backwaren. Hierbei kann es sich beispielsweise um Brötchen, Brot, insbesondere Kastenbrot, Plunderstücke, Kuchen, Baguettes oder Pizzas handeln. Das Backsystem 1 ist so abgestimmt, dass pro Stunde ca. 8500 Teiglinge verarbeitet werden können. Der Platzbedarf des Backsystems 1 nach den Fig. 1 bis 17 beträgt ca. 28 m x 8 m. Teiglinge, aus denen das Backgut hervorgeht, werden in einer Vorbereitungseinrichtung, die nur teilweise dargestellt ist, zur weiteren Verarbeitung im Backsystem 1 vorbereitet. Zu dieser Vorbereitung gehört das Mischen und Kneten des Teiges, welches bevorzugt automatisiert erfolgt. Der geknetete Teig wird dem Backsystem 1 über einen Hebelkipper 2 zugeführt. Dieser weist einen Einfüllbehälter 3 auf, der in Fig. 2 sowohl in einer Füllposition, in der er auf einem Boden 4 des Backsystems 1 aufliegt, als auch in einer diesbezüglich nach oben verlagerten und gekippten Kippposition dargestellt ist. Die Verlagerung des Einfüllbehälters 3 zwischen der Füllposition und der Kippposition erfolgt motorisch durch einen Hub/Kippmotor 5. In der Kippposition des Einfüllbehälters 3 fällt der darin befindliche Teig in einen Eingangstrichter 6 einer an sich bekannten Teigteilmaschine 7. In letzterer können Teig-Additive über einen seitlich angebrachten Zusatztrichter 8 zugegeben werden. Dieser kann, wie in Fig. 1 durch einen Doppelpfeil 9 gezeigt, bei Bedarf zwischen einer Zugabeposition, in der er mit der Teigteilmaschine 7 in Förderverbindung steht und die in Fig. 1 gezeigt ist, und einer von der Teigteilmaschine 7 entfernten Ruheposition verlagert werden.

In der Teigteilmaschine 7 wird der Teig in einzelne Teiglinge portioniert. Diese werden anschließend in einer mehrstufigen Wirkanlage 10 gewirkt. Hierbei durchlaufen die Teiglinge einen mäanderförmigen Transportweg, während dem sie ober- und unterseitig mit jeweils einem Fördertrumm eines vielfach umgelenkten Endlos-Förderbandes 11 in Wirkverbindung stehen. Wirkanlagen nach Art der Wirkanlage 10 sind bekannt, weswegen auf die Beschreibung einzelner Details verzichtet werden kann. Ein letzter Abschnitt des Endlos-Förderbandes 11 im Bereich des Ausganges der Wirkanlage 10 wird nachfolgend mit dem Bezugszeichen 11 a bezeichnet.

Nach dem Austritt aus der Wirkanlage 10 gelangen die gewirkten Teiglinge in eine automatische Gärblech-Stapeleinrichtung 12. Dort werden die Teiglinge automatisch auf einer Vielzahl etagenweise gestapelter Gärbleche 13 als Teigling-Chargen abgelegt. Hierbei werden die Teiglinge zunächst im Endabschnitt 11 a des Endlos-Förderbandes 11 auf den einzelnen, diesem Endabschnitt 11 a zugeführten Gärblechen 13 abgelegt und die Gärbleche 13 werden anschließend der Gärblech-Stapeleinrichtung 12 zugeführt. Die Gärbleche 13 können z. B. als Muldenboards ausgeführt sein, wobei dann jeder Teigling in einer entsprechenden Mulde des Gärbleches 13 zu liegen kommt. Derartige Gärbleche 13 werden auch als Peelboards bezeichnet. Gärbleche 13 können je nach Einsatzzweck auch mit Stoff überzogen oder als Kunststoffbleche vorgesehen sein. Die Fläche des einzelnen Gärbleches 13 sowie gegebenenfalls die Anzahl der Mulden eines Muldenboards sind Parameter, welche die Kapazität des Backsystems 1, also dessen Durchsatz mit Backgut, beeinflussen. Die Gärbleche 13 werden von einem Stapelgehäuse 14 der Gärblech-Stapeleinrichtung 12 getragen. Zur Stapelung der Gärbleche 13 in der Gärblech-Stapeleinrichtung 12 ist das Stapelgehäuse 14 mittels eines Antriebsmotors 14 a, eines sogenannten Pushers, vertikal verlagerbar. Von der Gärblech-Stapeleinrichtung 12 wird der mit den Teiglingen belegte Stapel von Gärblechen 13 an einen Gär-Hängewagen 15 einer Gärvorrichtung 16 übergeben. In einer Übergabeposition während dieser Übergabe ist der Gär-Hängewagen 15 von einem automatisch angetriebenen Einfuhr-Übergabearm 17 getragen, der in eine Halteaufnahme im unteren Bereich des Gär-Hängewagens 15 eingreift. Bei der Übergabe führt der Einfuhr-Übergabearm 17 mit dem Gär-Hängewagen 15 eine Übergabe-Verlagerungsbewegung aus, die sich aus einer Lateralbewegung, bei der der Gär-Hängewagen 15 in eine entsprechende Öffnung des Stapelgehäuses 14 der Gärblech-Stapeleinrichtung 12 einfährt, und einer Hubbewegung, bei der die in der Gärblech-Stapeleinrichtung 12 gestapelten Gärbleche 13 von Tragaufnahmen im Stapelgehäuse 14 abgehoben werden und auf entsprechenden Tragaufnahmen des Gär-Hängewagens 15 zu liegen kommen, zusammensetzt.

Die Wirkanlage 10, die Gärblech-Stapeleinrichtung 12 sowie der Einfuhr-Übergabearm 17 sind Teil einer Zuführeinrichtung 18, mittels der die Teiglinge von der Teigteilmaschine 7 hin zur Gärvorrichtung 16 transportiert werden.

Nach erfolgter Übernahme der Gärbleche 13 wird der Gär-Hängewagen 15 mit Hilfe des Einfuhr-Übergabearms 17 durch eine Zugangsöffnung 19 in einer Gärkammer 20 der Gärvorrichtung 16 in diese eingeführt. Der eingeführte Gär-Hängewagen 15 wird anschließend an einer Hängeaufnahme einer vertikal von einer Decke 21 der Gärkammer 20 herabhängenden Hängestange 22 aufgehängt. Anstelle einer Hängestange 22 kann auch ein Hängeseil zum Einsatz kommen. Wenn der Gär-Hängewagen 15 vollständig ins Innere der Gärkammer 20 eingeführt ist, wird die Zugangsöffnung 19 durch eine Gärkammer-Zugangstür 23 automatisch verschlossen.

Die Gärvorrichtung 16 weist eine Mehrzahl von Gär-Hängewägen 15 mit zugeordneten Hängestangen 22 auf, die Bestandteil einer angetriebenen Hängeeinrichtung 24 sind, welche vergleichbar zu einem Schlepp-Skilift arbeitet. Mittels dieser lassen sich die Gär-Hängewägen 15 in der Gärkammer 20 längs einer geschlossenen Bahn 25 horizontal bewegen. Der Antrieb der Hängereinrichtung 24 weist z. B. von Skilift-Antrieben her bekannte Komponenten auf, weswegen er hier nicht im einzelnen beschrieben ist. Während dem Transport der Gär-Hängewägen 15 in der Gärkammer 20 längs der Bahn 25 gären die in den Gär-Hängewägen 15 abgelegten Teiglinge. Der Gärvorgang dauert 30 bis 60 Minuten. Durch eine entsprechende Vergrößerung der Gärkammer 20 bzw. durch eine Verlangsamung des Transportes in der Gärkammer 20 längs der Bahn 25 kann auch eine Verlängerung der Gärzeit bis hin zu vier Stunden ermöglicht werden.

Während des Gärens wird der Gär-Hängewagen 15 längs der Bahn 25 solange transportiert, bis er in eine Ausgangs-Position gelangt, in der er einer Ausgangsöffnung 26 der Gärkammer 20 benachbart ist. Solange keine Ausfuhr eines Gär-Hängewagens 15 aus der Gärkammer 20 erfolgt, ist die Ausgangsöffnung 26 durch eine Gärkammer-Ausgangstür 26a verschlossen. Letztere ist wie die Gärkammer-Zugangstür 23 automatisch betätigbar. In der Ausgangs-Position wird der Gär-Hängewagen 15 mit Hilfe eines Ausfuhr-Übergabearms 27 von der Hängestange 22 abgenommen. Dieser ist analog zum Einfuhr-Übergabearm 17 ausgestaltet. Mit Hilfe des Ausfuhr-Übergabearms 27 vollführt der Gär-Hängewagen 15 eine Übergabe-Verlagerungsbewegung, die der oben bei der Einfuhr in die Gärkammer 20 beschriebenen Übergabe-Verlagerungsbewegung entspricht.

Nach Abschluss dieser zweiten Übergabe-Verlagerungsbewegung des Gär-Hängewagens 15 beim Ausführen aus der Gärkammer 20, bei der ebenfalls ein Pusher zum Einsatz kommt, sind die Gärbleche 13 mit den gegärten Teiglingen vom Gär-Hängewagen 15 an eine weitere Gärblech-Stapeleinrichtung 28 übergeben, die vom Aufbau her der Gärblech-Stapeleinrichtung 12 entspricht. Der Gär-Hängewagen 15 durchtritt hierzu ein Stapelgehäuse 29 der Gärblech-Stapeleinrichtung 28 durch eine entsprechende Einführöffnung. Der auf diese Weise entleerte Gär-Hängewagen 15 wird vom Ausfuhr-Übergabearm 27 anschließend durch die Ausgangsöffnung 26 wieder in die Gärkammer 20 zurückgezogen und an der dem Gär-Hängewagen 15 zugeordneten Hängestange 22 aufgehängt. Anschließend wird der leere Gär-Hängewagen 15 in eine der Zugangsöffnung 19 benachbarte Position längs der Fortsetzung der Bahn 25 weitertransportiert, wo er im Rahmen eines nächsten Einfuhr-Taktes vom Einfuhr-Übergabearm 17 zur Übernahme neuer Gärbleche 13 verlagert wird, welche zwischenzeitlich in der Gärblech-Stapeleinrichtung 12 aufgestapelt wurden.

Von der Gärblech-Stapeleinrichtung 28 werden die Gärbleche 13 nach einander, also entstapelt, auf ein oberes Fördertrumm 30 eines Förderbandes 31 einer Übergabe-Einrichtung 32 im Zuge eines sogenannten Abkrabbel-Vorganges übergeben. In letzterer werden die Teiglinge von den Gärblechen 13 automatisch abgenommen, wobei die Gärbleche 13 auch gewendet werden können. Die entleerten Gärbleche 13 werden anschließend an ein Gärblech-Rückführförderband 33 übergeben. Die Gärbleche 13 werden beim Transport auf dem Gärblech-Rückführförderband 33 gereinigt und werden an den Endabschnitt 11 a am Ende des Transportweges des Endlos-Förderbandes 11 der Wirkanlage 10 übergeben, wo sie erneut zur Aufnahme gewirkter Teiglinge am Ausgang der Wirkanlage 10 zur Verfügung stehen.

Die von den Gärblechen 13 abgenommenen gegärten Teiglinge werden von der Übergabe-Einrichtung 32 auf Backbleche 34 übergeben. Die Backbleche 34 haben - wie auch die Gärbleche 13 - eine Fläche von 980 mm x 580 mm. Die Backbleche 34 werden von der Übergabe-Einrichtung 32 in einer Backblech-Stapeleinrichtung 35 gestapelt. Dieser Stapelvorgang sowie der Aufbau der Backblech-Stapeleinrichtung 35 entsprechen denjenigen der Gärblech-Stapeleinrichtung 12. Anschließend erfolgt eine Übergabe der mit den gegärten Teiglingen bestückten gestapelten Backbleche 34 von der Backblech-Stapeleinrichtung 35 an einen Back-Hängewagen 36. Dieser wird bei der Übergabe von einem Einfuhr-Übergabearm 37 getragen. Der Aufbau des Back-Hängewagens 36 entspricht demjenigen des Gär-Hängewagens 15. Der Gär-Hängewagen 15 und der Back-Hängewagen 36 können insgesamt z. B. zwanzig Gärbleche 13 oder Backbleche 34 aufnehmen. Die Übergabe-Verlagerungsbewegung des Back-Hängewagens 36 sowie der Backbleche 34 entspricht derjenigen des Gär-Hängewagens 15 sowie der Gärbleche 13.

Der Ausfuhr-Übergabearm 27, die Gärblech-Stapeleinrichtung 28, die Übergabeeinrichtung 32, die Backblech-Stapeleinrichtung 35 sowie der Einfuhr-Übergabearm 37 sind Bestandteile einer Fördereinrichtung 38, welche die Teiglinge von der Gärvorrichtung 16 hin zu einem Stikkenofen 39 transportiert.

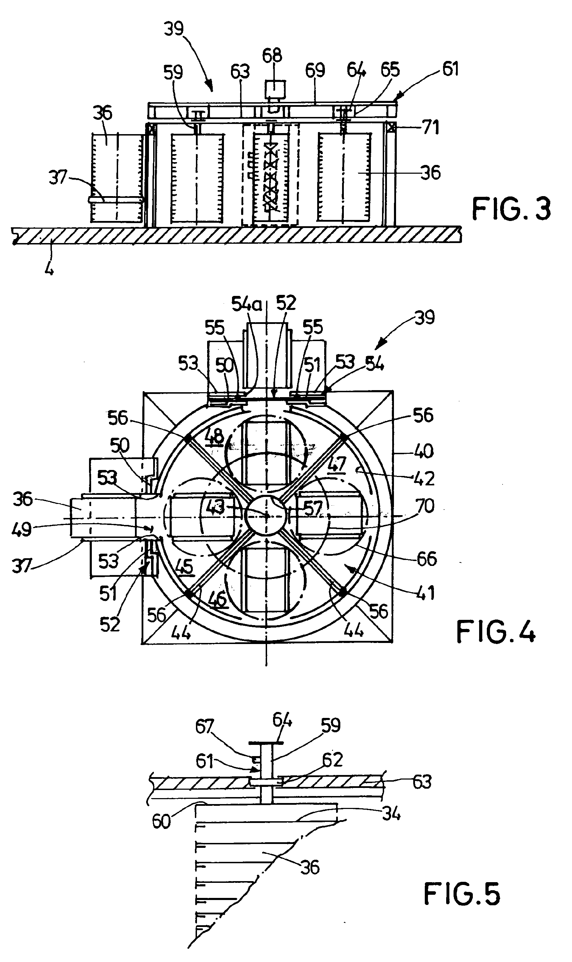

Details des Stikkenofens 39 zeigen die Fig. 3 bis 5. Der Stikkenofen 39 weist ein rechteckiges Gehäuse 40 sowie einen Backraum 41 mit zylindrischer Innenwand 42 und Hochachse 43 auf. Der Backraum 41 ist durch vertikal verlaufende Trennwände 44 in vier 90°-sektorförmige und gegeneinander wärmeisolierte Teilbackräume 45 bis 48 unterteilt. Auch eine andere Anzahl von Teilbackräumen, z. B. drei, fünf oder sechs Teilbackräume, ist möglich. Ein Einfuhr-Teilbackraum 45, der in Fig. 4 in 9 Uhr-Position dargestellt ist, ist über eine Zugangsöffnung 49 in der Innenwand 42 zugänglich. Durch die Zugangsöffnung 49 transportiert der Einfuhr-Übergabearm 37 den Back-Hängewagen 36 bei der Übergabe-Verlagerungsbewegung von der Backblech-Stapeleinrichtung 35 in den Stikkenofen 39. Die Zugangsöffnung 49 kann mittels einer zwei Schiebeflügel 50, 51 aufweisenden Schiebe-Zugangstür 52 automatisch verschlossen werden. In Fig. 4 ist die Schiebe-Zugangstür 52 geöffnet dargestellt. Die Schiebeflügel 50, 51 sind hierbei mit Hilfe von nicht dargestellten Aktuatoren in Schiebeaufnahmen 53 beiderseits der Zugangsöffnung 49 zurückgezogen.

In Fig. 4 entgegen dem Uhrzeigersinn schließen sich an den Einfuhr-Teilbackraum 45 zwei Durchfuhr-Backräume 46, 47 an. Diese sind in Fig. 4 in 6 Uhr- bzw. 3 Uhr-Position dargestellt. An den zweiten Durchfuhr-Teilbackraum 47 schließt sich entgegen dem Uhrzeigersinn ein in Fig. 4 in 12 Uhr-Position dargestellter Ausfuhr-Teilbackraum 48 an. In der Innenwand 42 des Ausfuhr-Teilbackraumes 48 ist eine Schiebe-Ausgangstür 54 ausgebildet, die entsprechend der Schiebe-Zugangstür 52 aufgebaut ist und eine Ausgangsöffnung 54a des Stikkenofens 39 verschließt. Die Schiebe-Ausgangstür 54 ist in Fig. 4 geschlossen dargestellt. Dabei stoßen die beiden Schiebeflügel 50, 51 stirnseitig dichtend aneinander an. Außenkantenbereiche der Schiebeflügel 50, 51 liegen in der Schließposition der Schiebe-Ausgangstür 54 über Dichtlippen 55 derart an den Schiebeaufnahmen 53 an, dass in dieser Schließposition der Innenraum 42 des Stikkenofens 39 nach außen abgedichtet ist. Dies gilt entsprechend für die Schließposition der Schiebe-Zugangstür 52. Weitere Dichtlippen 56 an den Stirnkantenbereichen der Trennwände 44, die der Innenwand 42 des Backraumes 41 zugewandt sind, sind Bestandteile von Dichtmitteln, mit denen die Teilbackräume 45 bis 48 gegeneinander im wesentlichen luftdicht abgedichtet sind.

Der Stikkenofen 39 weist eine in bekannter Weise ausgeführte, nicht dargestellte Heißluftquelle auf. Die Heißluftquelle kann z. B. einen Brenner, insbesondere einen Sturzbrenner, mit einem entsprechenden Wärmetauscher zur Erzeugung der Heißluft aufweisen. Die erzeugte Heißluft gelangt über einen koaxial zur Längsachse 43 angeordneten zentralen zylindrischen Heißluft-Zuführkanal 57 von der Heißluftquelle hin zu den Teilbackräumen 45 bis 48. In der Wand des Heißluft-Zuführkanals 57 sind jeweils zwischen den Anlageflächen zweier Trennwände 44 nicht dargestellte Durchtrittsöffnungen ausgebildet, die gesteuert geöffnet und verschlossen werden können. Diese Durchtrittsöffnungen verbinden den Heißluft-Zuführkanal 57 mit den Teilbackräumen 45 bis 48. Die Teilbackräume 45 bis 48 sind weiterhin mit jeweils zwei Heißluft-Abführkanälen 58 ausgestattet, welche die Teilbackräume 45 bis 48 mit dem Außenraum um den Stikkenofen 39 verbinden. Die Heißluft-Abführkanäle 58 lassen sich ebenfalls gesteuert öffnen und schließen.

Über die Zugangsöffnung 49 gelangt der mit gegärten Teiglingen bestückte Back-Hängewagen 36 in den Einfuhr-Teilbackraum 45 mit Hilfe des Einfuhr-Übergabearms 37. Analog zur Arbeitsweise des Einfuhr-Übergabearms 17 der Gärvorrichtung 16 übergibt der Einfuhr-Übergabearm 37 den Back-Hängewagen 36 dabei an eine Hängestange 59 mit einer Hängeaufnahme, an der eine Deckenwand 60 des Back-Hängewagens 36 aufgehängt wird. Details einer die Hängestange 59 umfassenden Hängeeinrichtung 61 zeigen die Fig. 3 und 5. Die Hängestange 59 ist in einer Lagerscheibe 62 drehbar gelagert, die wiederum in einer wärmeisolierten Zwischendecke 63 des Stikkenofens 39 festgelegt ist. Die Lagerscheibe 62 stellt ein Axial/Radiallager dar, wobei die Hängestange 59 durch die Lagerscheibe 62 in axialer Richtung festgelegt ist. Über eine umlaufende Dichtung zwischen der Hängestange 59 und der Zwischendecke 63 sind die Teilbackräume 45 bis 48 nach außen hin abgedichtet. An ihrem von der Deckenwand 60 des Back-Hängewagens 36 abgewandten Ende weist die Hängestange 59 ein Kettenrad 64 auf. Mit diesem arbeitet eine nicht dargestellte Antriebskette zusammen, die von einem Antriebsmotor 65 angetrieben ist. Jede Hängestange 59 weist einen separaten Antriebsmotor 65 auf, der von der Zwischendecke 63 getragen ist. Mit Hilfe der Antriebsmotoren 65 lassen sich die Back-Hängewägen 36 in den Teilbackräumen 45 bis 48 um ihre Hochachsen drehen, wie z. B. in Fig. 4 durch eine Begrenzungsbahn 66 angedeutet.

Weiterhin weist die Hängestange 59 einen mit dieser verbundenen Mitnehmer 67 auf. Die Mitnehmer 67 der vier den Teilbackräumen 45 bis 48 zugeordneten Hängestangen 59 sind über eine nicht dargestellte mechanische Verbindung mit einem zentralen Antriebsmotor 68 verbunden. Dieser wird von einer oberhalb der Zwischendecke 63 angeordneten Deckenwand 69 des Gehäuses 40 des Stikkenofens 39 getragen. Beim Betrieb des zentralen Antriebsmotors 68 rotiert die Zwischendecke 63 mitsamt den vier Hängestangen 59 und den an der Zwischendecke 63 festgelegten Trennwänden 44 um die Hochachse 43, wie z. B. in Fig. 4 durch eine Begrenzungsbahn 70 angedeutet. Die Zwischendecke 63 stützt sich über radial außenliegende Axial/Radiallager 71 an der Außenwand des Gehäuses 40 des Stikkenofens 39 ab.

Die Zuordnung der Back-Hängewägen 36, der Hängestangen 59 sowie der Trennwände 44 zu den Teilbackräumen 45 bis 48 ist bei dieser Drehbewegung nicht fest, sondern wird ausschließlich durch die jeweilige Winkelposition der einzelnen Teilbackräume 45 bis 48 innerhalb des Backraumes 41 festgelegt. So ist beispielsweise derjenige durch die zugehörigen Trennwände 44 begrenzte Teilbackraum, der im Verlauf der durch den zentralen Antriebsmotor 68 angetriebenen Drehung in die 12 Uhr-Position zu liegen kommt, unabhängig davon, welche beiden Trennwände 44 diesen Teilbackraum begrenzen, der Ausfuhr-Teilbackraum 48.

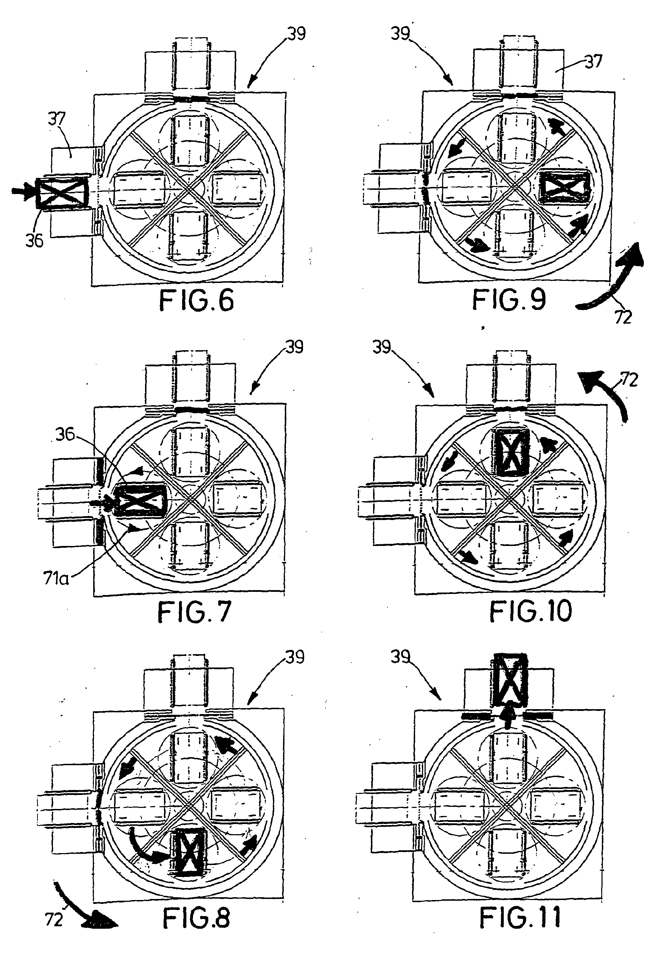

Der Backvorgang im Stikkenofen 39 wird nachfolgend anhand der Fig. 6 bis 17 beschrieben, welche zwei alternative kontinuierliche Backverfahren für die Backgut-Chargen in den Back-Hängewagen 36 darstellen.

Fig. 6 bis 11 zeigen ein erstes derartiges Backverfahren. Fig. 6 und 7 zeigen, wie ein Back-Hängewagen 36 vom Einfuhr-Übergabearm 37 in den Einfuhr-Teilbackraum 45 übergeben wird. Anschließend wird die Schiebe-Zugangstür 52 verschlossen. Der zugehörige Antriebsmotor 65 wird aktiviert, so dass, wie in Fig. 7 durch Pfeile 71 a dargestellt, der Back-Hängewagen 36 im Einfuhr-Teilbackraum 45 um seine Hochachse rotiert. Durch entsprechendes Ansteuern der Durchtrittsöffnungen im Heißluft-Zuführkanal 57 sowie in den Heißluft-Abführkanälen 58 des Einfuhr-Teilbackraumes 45 wird der Back-Hängewagen 36 im Einfuhr-Teilbackraum 45 mit einer vorgegebenen Menge von Heißluft umströmt, so dass das gegärte Backgut auf den Backblechen 34 angebacken wird. Anschließend wird durch Aktivieren des zentralen Antriebsmotors 68 die Zwischendecke 63 um die zentrale Hochachse 43 in Rotation versetzt. Beim Betrieb des Antriebsmotors 68 drehen sich die Zwischendecke 63 und die Trennwände 44 nach Art einer Dreh-Zugangstür, wie diese z. B. im Zugangsbereich von Kaufhäusern vorgefunden werden kann. Die Drehung, die hierbei die Zwischendecke 63 sowie die Trennwände 44 vollführen, ist durch Pfeile 72 in den Fig. 8 bis 10 angedeutet. Der Back-Hängewagen 36 durchläuft in der Folge, wie in den Fig. 8 bis 10 gezeigt, die beiden Durchfuhr-Teilbackräume 46, 47 sowie den Ausfuhr-Teilbackraum 48, wobei das Backgut durchgebacken wird. Während des Durchlaufens der einzelnen Teilbackräume 45 bis 48 wird der Back-Hängewagen 36 ständig um seine eigene Hochachse gedreht. Während der Betätigung des zentralen Antriebsmotors 68 rotiert der Back-Hängewagen 36 nicht um seine eigene Hochachse. Der Antriebsmotor 65, der diese Hochachsen-Rotation bewirkt, wird erst dann zugeschaltet, wenn der zentrale Antriebsmotor 68 wieder deaktiviert wurde. Die Hängeeinrichtung 61 ist derart ausgelegt, dass sich die Trennwände 44 sowie der Back-Hängewagen 36 synchron zueinander um die Hochachse 43 drehen. Nach Beendigung des Backvorganges, der 18 bis 24 Minuten dauern kann, wird die Schiebe-Ausgangstür 54, die bis zu diesem Zeitpunkt geschlossen war, geöffnet und der Back-Hängewagen 36 wird mittels eines Ausfuhr-Übergabearms 73, der entsprechend dem Einfuhr-Übergabearm 37 arbeitet, von der Hängestange 59 abgenommen und durch die Ausgangsöffnung 54 a aus dem Stikkenofen 39 entnommen.

Beim Backverfahren nach den Fig. 6 bis 11 gelangt erst dann im Rahmen eines neuen Back-Taktes des Backsystems 1 wieder ein Back-Hängewagen 36 in den Backraum 41 des Stikkenofens 39, wenn der zuletzt gebackene Back-Hängewagen 36 den Backraum 41 verlassen hat.

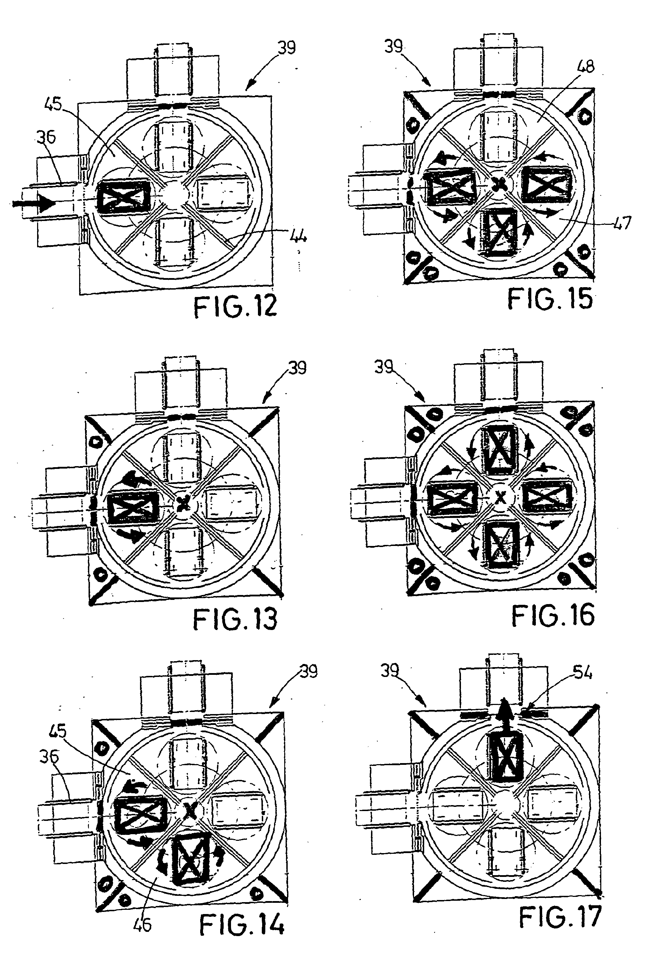

Fig. 12 bis 17 zeigen ein zweites Backverfahren, welches mit dem Stikkenofen 39 möglich ist und bei dem unter Erhöhung der Anzahl der Back-Takte bei gegebener Winkelgeschwindigkeit der Trennwände 44 gleichzeitig Backgut-Chargen in mehreren Back-Hängewägen 36 gebacken werden können. Fig. 12 und 13 entsprechen, was den Transport eines ersten Back-Hängewagens 36 angeht, den Fig. 6 und 7. Wenn das Backgut im ersten Back-Hängewagen 36 im Einfuhr-Teilbackraum 45 gebacken wird, wird mit Hilfe des Einfuhr-Übergabearms 37 schon ein zweiter Back-Hängewagen 36 zur Einfuhr in den Einfuhr-Teilbackraum 45 bereitgestellt und somit ein weiterer Back-Takt eingeleitet, welcher teilweise mit dem ersten Back-Takt überlappt. Wenn, wie in Fig. 14 dargestellt, der erste Back-Hängewagen 36 den ersten Durchfuhr-Teilbackraum 46 erreicht hat, wird der zweite Back-Hängewagen 36 in den Einfuhr-Teilbackraum 45 eingebracht und das dort befindliche Backgut wird angebacken. Sobald der erste Back-Hängewagen 36 den zweiten Durchfuhr-Teilbackraum 47 erreicht hat, wird ein dritter Back-Hängewagen 36 in den Einfuhr-Teilbackraum 45 eingebracht, wie in Fig. 15 dargestellt. Wenn der erste Back-Hängewagen 36 den Ausfuhr-Teilbackraum 48 erreicht hat, wird ein vierter Back-Hängewagen 36 in den Einfuhr-Teilbackraum 45 eingebracht. Wenn das dortige Backgut angebacken wird, wird im Stikkenofen 39 das Backgut von insgesamt vier Back-Hängewägen 36 im Rahmen von vier einander überlappenden Back-Takten gleichzeitig gebacken. Während das Backgut des ersten Back-Hängewagens 36 angebacken wird, wird das Backgut des zweiten und dritten Back-Hängewagens 36 durchgebacken und das Backgut des vierten Back-Hängewagens 36 ausgebacken. Mit Hilfe der Durchtrittsöffnungen in dem Heißluft-Zuführkanal 57 und in dem jeweiligen Heißluft-Abführkanälen 58 in den Teilbackräumen 45 bis 48 erfolgt eine Steuerung der Umluft um die Back-Hängewägen 36 derart, dass für diese verschiedenen Backsituationen, also das Anbacken, das Durchbacken sowie das Ausbacken, geeignete Backverhältnisse vorliegen. Beispielsweise können die entsprechenden Durchtrittsöffnungen beim Anbacken nur einen geringeren Umluftstrom zulassen, so dass das Anbacken sanfter geschieht als das nachfolgende Durchbacken.

Nach dem Ausbacken werden auch beim Backverfahren nach den Fig. 12 bis 17 die Back-Hängewägen 36 wieder aus dem Stikkenofen 39 durch die Schiebe-Ausgangstür 54 heraustransportiert. Je nach Bedarf können auch mehr als vier Back-Hängewägen 36, wie in den Fig. 12 bis 17 gezeigt, nach dem beschriebenen gleichzeitigen zweiten Backverfahren hintereinander durch den Stikkenofen 39 geschleust werden.

Nachfolgend wird der Weitertransport des Backguts nach dem Backen im Stikkenofen 39 beschrieben. Dieser Weitertransport erfolgt für die beiden oben beschriebenen Backverfahren in vergleichbarer Weise, so dass hier nicht explizit zwischen den beiden Backverfahren unterschieden wird. Nach dem Verlassen des Stikkenofens 39 wird der Back-Hängewagen 36 mit Hilfe des Ausfuhr-Übergabearms 73 an eine weitere Backblech-Stapeleinrichtung 74 übergeben, die vom Aufbau her der Backblech-Stapeleinrichtung 35 entspricht. Von dort werden die einzelnen Backbleche 34 an ein Endlos-Förderband 75 mit viertelkreisförmigem Fördertrumm 76 übergeben. Der Ausfuhr-Übergabearm 73, die Backblech-Stapeleinrichtung 74 sowie das Endlos-Förderband 75 sind Bestandteile einer die Teiglinge aus dem Stikkenofen 39 kontinuierlich abtransportierenden Abführeinrichtung 76 a. Das Endlos-Förderband 75 schafft eine Förderbindung zwischen der Backblech-Stapeleinrichtung 74 und der Übergabeeinrichtung 32. Zwischen dem der Übergabeeinrichtung 32 benachbarten End-Abschnitt des Endlos-Förderbandes 75 und der Übergabe-Einrichtung 32 ist noch eine weitere Backblech-Stapeleinrichtung 77 vorgesehen, in der die Backbleche 34 zunächst gestapelt zwischengelagert werden, bevor sie einzeln wieder an die Übergabeeinrichtung 32 zur Aufnahme neuer gegärter Teiglinge abgegeben werden. Beim Transport auf dem Fördertrumm 76 wird das Backgut von den Backblechen 34 abgenommen und zur weiteren Verwendung verpackt. Nach dem Verpacken kann das Backgut in einem Kühlraum 78 a zwischengelagert werden. Die leeren Backbleche 34 durchlaufen anschließend eine in Fig. 1 angedeutete Reinigungsstation 78, bevor sie in der Backblech-Stapeleinrichtung 77, die vom prinzipiellen Aufbau her den Backblech-Stapeleinrichtungen 74 und 35 entspricht, gestapelt werden.

Beim Backsystem 1 sind getrennte Kreisläufe für die Gärbleche 13 einerseits und für die Backbleche 34 andererseits realisiert.

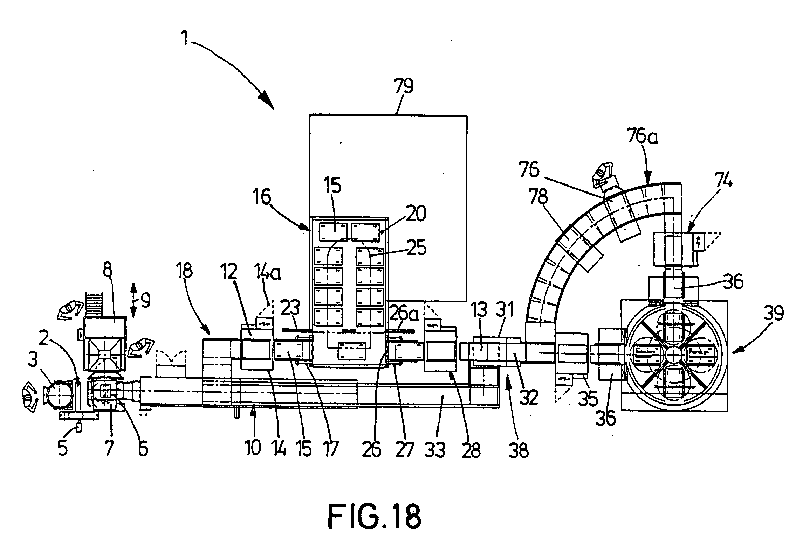

Fig. 18 zeigt ein alternatives Backsystem. Komponenten, die denjenigen entsprechen, die schon unter Bezugnahme auf die Fig. 1 bis 17 beschrieben wurden, erhalten die gleichen Bezugszeichen und werden nicht nochmals im einzelnen erläutert.

Das Backsystem 1 nach Fig. 18 ist kompakter aufgebaut als dasjenige der Fig. 1 bis 17, weist aber prinzipiell die gleichen Hauptkomponenten wie dieses auf. Diese größere Kompaktheit wird z. B. dadurch erzielt, dass der Transportweg der Wirkanlage 10 zum Teil parallel zum Transportweg in die Gärvorrichtung 16 erfolgt. Der Austritt der Gärbleche aus der Wirkanlage 10 erfolgt beim Backsystem 1 nach Fig. 18 zur Seite hin und nicht, wie beim Backsystem 1 nach den Fig. 1 bis 17, in Längsrichtung der Wirkanlage 10. Zudem erfolgt das Rückführen der Gärbleche 13 nach Durchlaufen der Gärvorrichtung 16 über das Gärblech-Rückführförderband 33 auf einer Bahn, die benachbart zur Wirkanlage 10 fluchtend zu deren Längsrichtung erfolgt. Beim Backsystem 1 nach den Fig. 1 bis 17 erfolgt dieses Rückführen der Gärbleche 13 zur Wirkanlage 10 von der Seite her. Der Platzbedarf des kompakten Backsystems 1 nach Fig. 18 beträgt ca. 24 m x 8 m.

In Fig. 18 ist eine erweiterte Gärkammer 79, mit der eine Verlängerung der Gärzeit auf z. B. vier Stunden möglich ist, im Grundriss dargestellt.

## Patentansprüche

1. Backsystem (1)
- mit einer Vorbereitungseinrichtung (2, 7, 10) für Teiglinge,
- mit einer Gärvorrichtung (16) mit einem Gärraum (20),
- mit einer Teiglinge oder Teigling-Chargen hin zum Gärraum (20) kontinuierlich transportierenden Zuführ-Einrichtung (18),
- mit einem Stikkenofen (39), der derart ausgeführt ist, dass das Backgut kontinuierlich gebacken wird,
- mit einer Teiglinge oder Teigling-Chargen vom Gärraum (20) zum Stikkenofen (39) kontinuierlich transportierenden Fördereinrichtung (38) und
- mit einer Backgut oder Backgut-Chargen aus dem Stikkenofen (39) kontinuierlich abtransportierenden Abführ-Einrichtung (76 a).

2. Backsystem nach Anspruch 1, **dadurch gekennzeichnet, dass** die Gärvorrichtung 16 eine abgeschlossene Gärkammer (20) und eine Gär-Fördereinrichtung (24) für Teiglinge und/oder Teigling-Chargen innerhalb der Gärkammer (20) umfasst, wobei Teigling-Chargen insbesondere in hängend angeordneten, eine Mehrzahl von Gärblechen (13) umfassenden Gärwagen (15) untergebracht sind.

3. Backsystem nach Anspruch 1 oder 2, **dadurch gekennzeichnet, dass** der Stikkenofen (39) einen Backraum (41) mit einer Mehrzahl von mittels einer Antriebseinrichtung (68) in verschiedene Backpositionen verstellbaren Teilbackräumen (45 bis 48) aufweist, in denen jeweils mindestens ein Backwagen (36) vorzugsweise drehbar angeordnet werden kann, wobei insbesondere Backgut-Chargen in hängend angeordneten, eine Mehrzahl von Backblechen (34) umfassenden Backwagen (36) untergebracht sind.

4. Backsystem nach Anspruch 3, **dadurch gekennzeichnet, dass** der Stikkenofen (39) eine gemeinsame Heißluftquelle (57) für die Teilbackräume (45 bis 48) aufweist und vorzugsweise zusätzlich getrennte Luftzufuhr- und/oder Luftabfuhrkanäle (58) für die Teilbackräume (45 bis 48) aufweist.

5. Backsystem nach Anspruch 3 oder 4, **dadurch gekennzeichnet, dass** die Teilbackräume (45 bis 48) als Sektoren eines zylindrischen Backraumes (41) ausgebildet sind, wobei insbesondere vier Teilbackräume (45 bis 48) vorgesehen sind.

6. Backsystem nach einem der Ansprüche 3 bis 5, **dadurch gekennzeichnet, dass** die Teilbackräume (45 bis 48) insbesondere innerhalb eines gemeinsamen Stikkenofen-Gehäuses (40) um eine Hochachse (43) von diesem drehbar angeordnet sind.

7. Backsystem nach einem der Ansprüche 3 bis 6, **dadurch gekennzeichnet, dass** jeder Teilbackraum (45 bis 48) einen Drehantrieb (56) für den dem Teilbackraum (45 bis 48) zugeordneten Backwagen (36) aufweist.

8. Backsystem nach einem der Ansprüche 3 bis 7, **dadurch gekennzeichnet, dass** die Teilbackräume (45 bis 48) Dichteinrichtungen (55, 56) aufweisen, mit denen sie gegeneinander und/oder nach außen im Wesentlichen luftdicht abgedichtet sind.

9. Backsystem nach einem der vorhergehenden Ansprüche, **dadurch gekennzeichnet, dass** die Fördereinrichtung (38) derart ausgeführt ist, dass sie mit einer automatischen Zugangstür (52) des Stikkenofens (39) zusammenarbeitet, die insbesondere als abgedichtete Schiebetür (52) ausgeführt ist.

10. Backsystem nach einem der vorhergehenden Ansprüche, **dadurch gekennzeichnet, dass** die Zuführeinrichtung (18) und/oder die Fördereinrichtung (3 8) und/oder die Abführeinrichtung (76 a) derart ausgeführt sind, dass sie die Gärbleche (13) und/oder Backbleche (34) getrennt von dem Gärwagen (15) und/oder Backwagen (36) fördert, wobei insbesondere eine Umsetzeinrichtung (14, 17, 26, 28, 32, 35, 37, 74) für Bleche (13, 34) oder Wägen (15, 36) und/oder eine Wendeeinrichtung (32) für Teiglinge vorgesehen ist.

11. Backsystem nach einem der vorhergehenden Ansprüche, **dadurch gekennzeichnet, dass** die Zuführeinrichtung (18) und/oder die Fördereinrichtung (38) und/oder die Abführeinrichtung (76 a) eine automatische Stapel/Entstapeleinrichtung (12, 28, 35, 74, 77) für Gärbleche (13) und/oder Backbleche (34) aufweist, welche insbesondere umfasst:
- eine Stapeleinrichtung (12) für Gärbleche (13) vor dem Eintritt in die Gärvorrichtung (16),
- eine Entstapeleinrichtung (28) für Gärbleche (13) nach dem Austritt aus der Gärvorrichtung (16),
- eine Stapeleinrichtung (35) für Backbleche (34) für dem Eintritt in den Stikkenofen (39) und
- eine Entstapeleinrichtung (74) für Backbleche (34) nach dem Austritt aus dem Stikkenofen (39).

12. Backsystem nach einem der vorhergehenden Ansprüche, **dadurch gekennzeichnet, dass** die Zuführeinrichtung (18) und/oder die Fördereinrichtung (38) und/oder die Abführeinrichtung (76a) eine insbesondere eine Reinigungs- und/oder eine Lagereinrichtung (78) umfassende Rückführeinrichtung (33, 75) für Gärbleche (13) und/oder Backbleche (34) hin zu einem Förder-Ausgangspunkt (11 a, 32) nach deren Benutzung aufweist.

13. Backsystem nach einem der vorhergehenden Ansprüche, **dadurch gekennzeichnet, dass** die Abführeinrichtung (76a) derart ausgeführt ist, dass sie mit einer automatischen Ausgangstür (54) des Stikkenofens (39) zusammenarbeitet, die insbesondere als abgedichtete Schiebetür (54) ausgeführt ist.

14. Backsystem nach den Ansprüchen 9 und 13, **dadurch gekennzeichnet, dass** die Zugangstür (52) und/oder die Ausgangstür (54) Dichteinrichtungen (55) aufweisen, mit denen der Backraum (41) nach außen in einer Schließposition der Zugangstür (52) und/oder der Ausgangstür (54) im Wesentlichen luftdicht abgedichtet ist.

15. Backsystem nach einem der vorhergehenden Ansprüche, **gekennzeichnet durch** eine der Abführeinrichtung (76a) nachgeordnete Kühleinrichtung (78a) für das Backgut.

16. Herstellungsverfahren für Backwaren mit folgenden Schritten:
- Vorbereiten von Teiglingen,
- kontinuierliches Zuführen der Teiglinge oder von Teigling-Chargen zu einem Gärraum (20),
- kontinuierliches Gären von Teiglingen oder von Teigling-Chargen in dem Gärraum (20),
- kontinuierliches Fördern der gegärten Teiglinge und der Teigling-Chargen vom Gärraum (20) zu einem Stikkenofen (39),
- kontinuierliches Backen des Backguts oder von Backgut-Chargen in dem Stikkenofen (39) und
- Abführen des Backguts oder von Backgut-Chargen aus dem Stikkenofen (39).

17. Herstellungsverfahren nach Anspruch 16, **dadurch gekennzeichnet, dass** das Vorbereiten der Teiglinge das Mischen, Wirken und Teilen des Teiges umfasst.

18. Herstellungsverfahren nach Anspruch 16 oder 17, **dadurch gekennzeichnet, dass** die Teiglinge beim Zuführen zum Gärraum (20) auf einen Gärträger (15) mit einer Mehrzahl gestapelter Gärbleche (13) geladen werden, wobei insbesondere die Gärbleche (13) getrennt vom sonstigen Gärträger (15) gefördert werden.

19. Herstellungsverfahren nach Anspruch 18, **dadurch gekennzeichnet, dass** die Teiglinge beim Fördern vom Gärraum (20) zum Stikkenofen (39) von dem Gärträger (15) abgeladen werden.

20. Herstellungsverfahren nach Anspruch 19, **dadurch gekennzeichnet, dass** die Teiglinge beim Fördern vom Gärraum (20) zum Stikkenofen (39) auf einen Backträger (36) mit einer Mehrzahl gestapelter Backbleche (34) geladen werden.

21. Herstellungsverfahren nach einem der Ansprüche 18 bis 20, **dadurch gekennzeichnet, dass** die Gärbleche (13) und/oder die Backbleche (34) in einem geschlossenen Kreislauf insbesondere kontinuierlich transportiert werden.

22. Herstellungsverfahren nach Anspruch 21, **dadurch gekennzeichnet, dass** während des Transports im geschlossenen Kreislauf die Gärbleche (13) und/oder die Backbleche (34) eine Reinigungs- und/oder Lagerstation (78) durchlaufen.

23. Herstellungsverfahren nach einem der Ansprüche 16 bis 22, **dadurch gekennzeichnet, dass** das Backgut oder die Backgut-Chargen mehrere Backpositionen im Stikkenofen (39) durchlaufen.

24. Herstellungsverfahren nach Anspruch 23, **dadurch gekennzeichnet, dass** ein Stück Backgut oder eine Backgut-Charge alle Backpositionen durchläuft, bevor das nächste Backgut oder die Backgut-Charge in den Stikkenofen (39) befördert wird.

25. Herstellungsverfahren nach Anspruch 23, **dadurch gekennzeichnet, dass** für eine Mehrzahl von nacheinander zu backenden Backgut-Stücken oder Backgut-Chargen jeweils ein neues Stück Backgut oder eine neue Backgut-Charge in den Stikkenofen (39) befördert wird, wenn das zuletzt in den Stikkenofen (39) beförderte Stück Backgut oder die zuletzt in den Stikkenofen (39) beförderte Backgut-Charge die nächste Backposition erreicht hat.

26. Herstellungsverfahren nach einem der Ansprüche 16 bis 25, **dadurch gekennzeichnet, dass** das aus dem Stikkenofen (39) abgeführte Backgut gekühlt wird.
